# EUROPEAN PATENT APPLICATION

(11) **EP 1 466 757 A1**
(43) Date of publication of application: **13.10.2004**
(21) Application number: 03425216.3
(22) Date of filing: 07.04.2003
(51) Int. Cl.: B60B 33/08, A47B 91/04

(54) **Device for facilitating the movement of furniture**

(71) Applicant: RO.MA.NI. S.a.s. di Locatelli Pietro & C., 24036 Ponte S.Pietro (Prov. of Bergamo) (IT)
(72) Inventor: Locatelli, Pietro, 24036 Ponte S. Pietro (Prov. of Bergamo) (IT)
(74) Representative: Modiano, Guido, Dr.-Ing.

(57) **Abstract**

A device for facilitating the movement of furniture components or the like, which comprises an enclosure (2a-2d) that forms a receptacle (3a-3d) for a resting element (4a-4d) that protrudes, in at least one active condition, from an opening (5a-5d) of the enclosure (2a-2d). The enclosure (2a-2d) can be accommodated in a seat (6) formed in the base of a furniture component (8) or the like so that the opening (5a-5d) of the enclosure (2a-2d) faces downward. The resting element (4a-4d) can move with respect to the enclosure (2a-2d) from a movement position, in which it protrudes partially from the enclosure (2a-2d) and constitutes an elastically yielding resting member for the furniture component (8) or the like on the floor (7), to a static position, in which it is at least partially retracted into the enclosure (2a-2d) with respect to the movement position, in order to obtain a substantially rigid resting of the furniture component (8) or the like, and vice versa.

## Description

The present invention relates to a device for facilitating the movement of furniture components or the like.

It is known that moving furniture components, particularly when such components are rather heavy, is an onerous and awkward operation owing to the friction and the small differences in level that contrast the sliding of the component on the floor.

In order to facilitate this operation, EP 402.346 discloses a device adapted to be accommodated in a foot or more generally in the base of the furniture component and provided with a ball that replaces the foot or base of the furniture component in resting on the floor during movement, so as to reduce the friction force that contrasts movement and provide an elastically yielding resting action that allows to overcome small level differences more easily.

More particularly, this device is composed of a substantially cylindrical enclosure that is meant to be arranged inside an appropriately provided seat formed in the base or foot of the furniture component. Said enclosure contains a cylindrical receptacle for a ball that can protrude from an opening provided on the side of the enclosure that is directed toward the floor when the device is fitted to the furniture component. Said ball can move axially along the cylindrical receptacle in order to pass from a movement position, in which it protrudes partially from the enclosure through said opening so as to replace the base of the furniture component in resting on the floor, to a static position, in which it is retracted into the enclosure, and vice versa. The retraction of the ball into the enclosure is biased by a spring that is accommodated in said enclosure. The spring is sized so that when the furniture component is not loaded, i.e. when only the weight of the furniture component bears on the spring, the ball protrudes, under the action of the spring, below the furniture component, and when the furniture component is instead loaded with objects or persons the spring yields until it allows the ball to retract substantially completely into the enclosure, therefore allowing the furniture component to rest firmly on the ground.

In this manner, by unloading the furniture component it is possible to move it more easily, since it rests on the floor by means of the ball, whereas in normal conditions, when the component is loaded, it rests firmly on the ground so as to avoid any accidental movement.

This type of device, despite facilitating the movement of furniture components and making it quieter, has problems.

One of these problems is constituted by the fact that in order to achieve fully satisfactory operation of the device, the spring must be sized correctly.

Had the spring generated an excessive force, the furniture component would be unstable even when fully loaded, owing to the fact that the ball constantly replaces the base of the furniture component in resting on the floor, whereas had the spring generated an insufficient force the ball would be constantly retracted into the enclosure and would not perform its function of replacing the base of the furniture component in order to reduce friction and constitute an elastic resting member during movement, thus making it useless to adopt the device.

This problem complicates considerably the application of devices of this kind, since it requires the production of several models of devices that differ from each other in terms of the spring used, according to the various weight categories of the furniture components in which they are to be installed.

The aim of the present invention is to solve the problem described above by providing a device for facilitating the movement of furniture components or the like that can be adapted to various weight categories of the furniture components to which it must be fitted, without requiring replacement of its components.

Within this aim, an object of the invention is to limit the number of models of the device that are required in order to meet the operating requirements for a wide range of furniture components.

Another object of the invention is to provide a device that can be manufactured at competitive costs, is highly reliable in operation and has a low wear.

This aim and these and other objects that will become better apparent hereinafter are achieved by a device for facilitating the movement of furniture components or the like, characterized in that it comprises an enclosure that forms a receptacle for a resting element that protrudes, in at least one active condition, from an opening of said enclosure, said enclosure being accommodatable in a seat provided in the base of a furniture component or the like so that said opening faces downward, said resting element being movable with respect to said enclosure from a movement position, in which it protrudes partially from said enclosure through said opening and constitutes an elastically yielding resting member for the furniture component or the like on the floor, to a static position, in which it is at least partially retracted into said enclosure with respect to said movement position, in order to obtain a substantially rigid resting of the furniture component or the like, and vice versa, said resting element being movable from said movement position to said static position in contrast with the action of elastic means that are accommodated in said enclosure, means being provided for adjusting the elastic preloading of said elastic means in order to adjust the elastic force that contrasts the passage of said resting element from said movement position to said static position.

Further characteristics and advantages of the invention will become better apparent from the description of some preferred but not exclusive embodiments of the device according to the invention, illustrated by way of non-limitative example in the accompanying drawings, wherein:

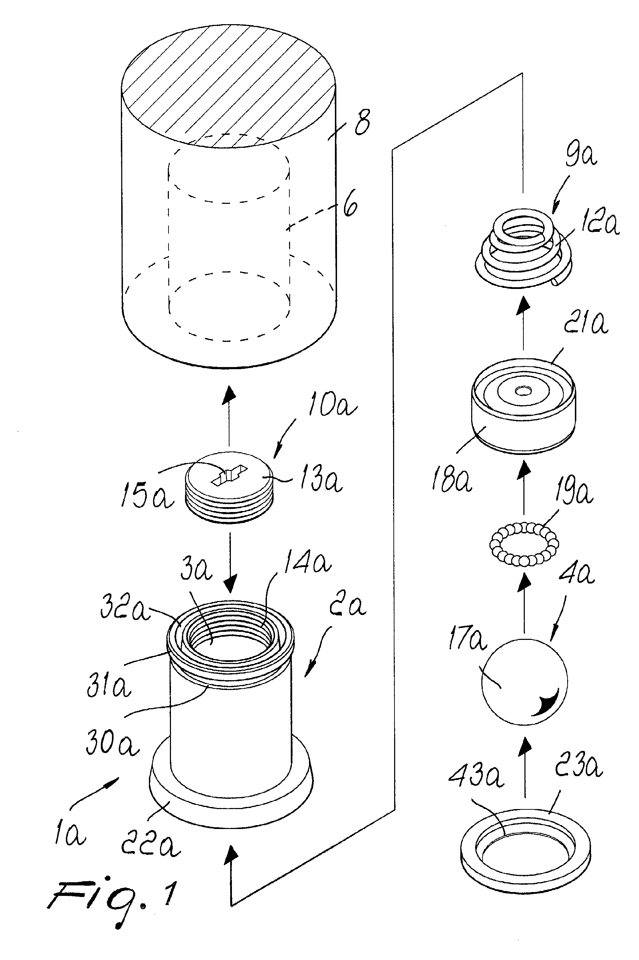

Figures 1 to 4 are views of a first embodiment of the device according to the invention, and more particularly:
   Figure 1 is an exploded perspective view of the device;
   Figure 2 is an axial sectional view of the device associated with a furniture component in the movement position;
   Figure 3 is an axial sectional view of the device associated with a furniture component in the static position;
   Figure 4 is a view of the device, similar to Figure 2, with the addition of an accessory;
Figures 5 to 7 illustrate a second embodiment of the device according to the invention, and more particularly:

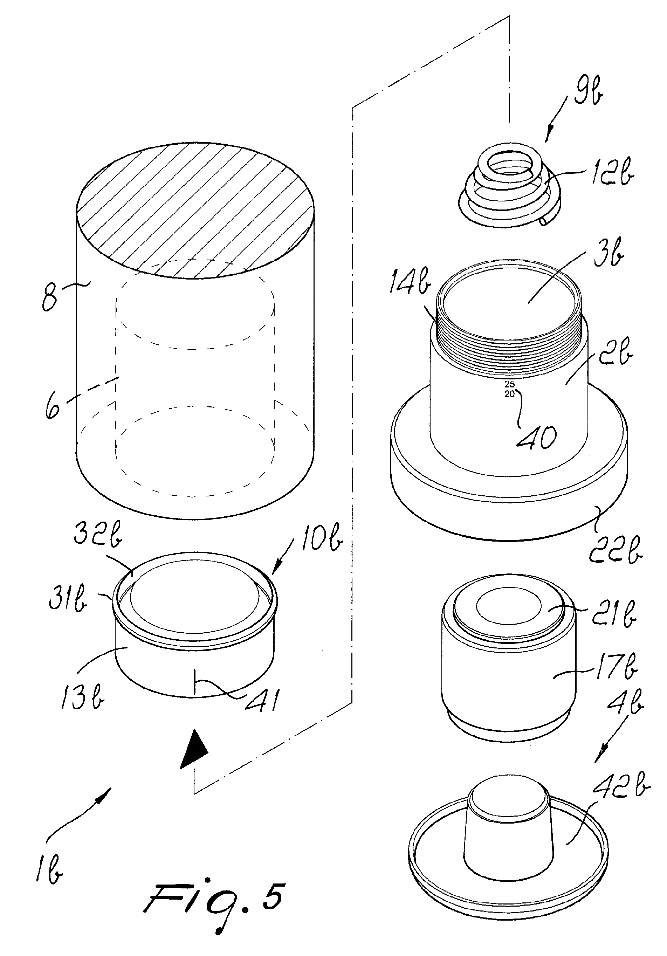

   Figure 5 is an exploded perspective view of the device;

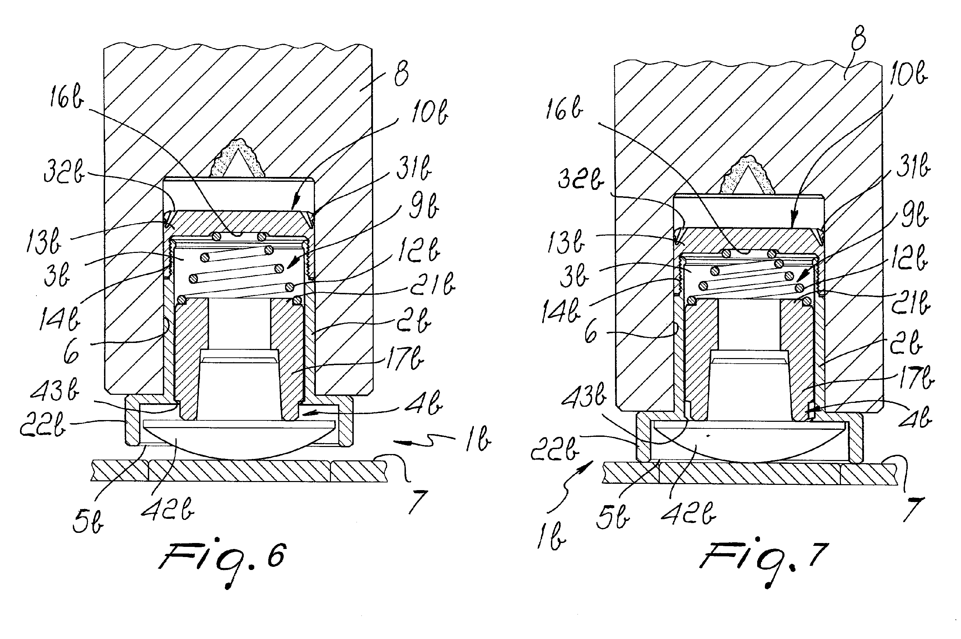

   Figure 6 is an axial sectional view of the device associated with a furniture component in the movement position;
   Figure 7 is an axial sectional view of the device associated with a furniture component in the static position;

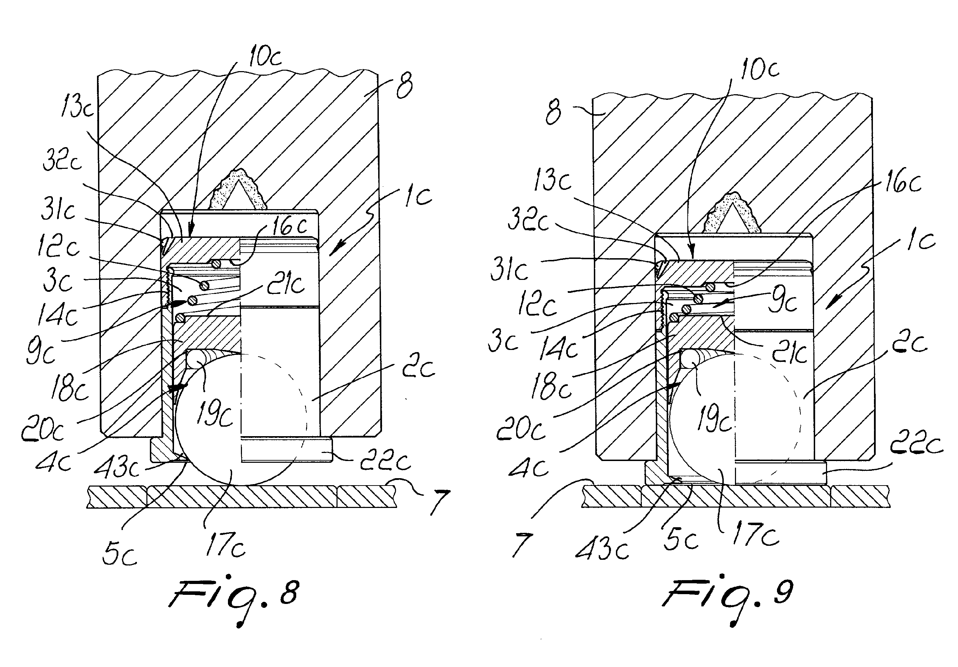

Figures 8 and 9 are partially axial sectional views of a third embodiment of the device according to the invention associated with a furniture component, respectively in the movement position and in the static position;

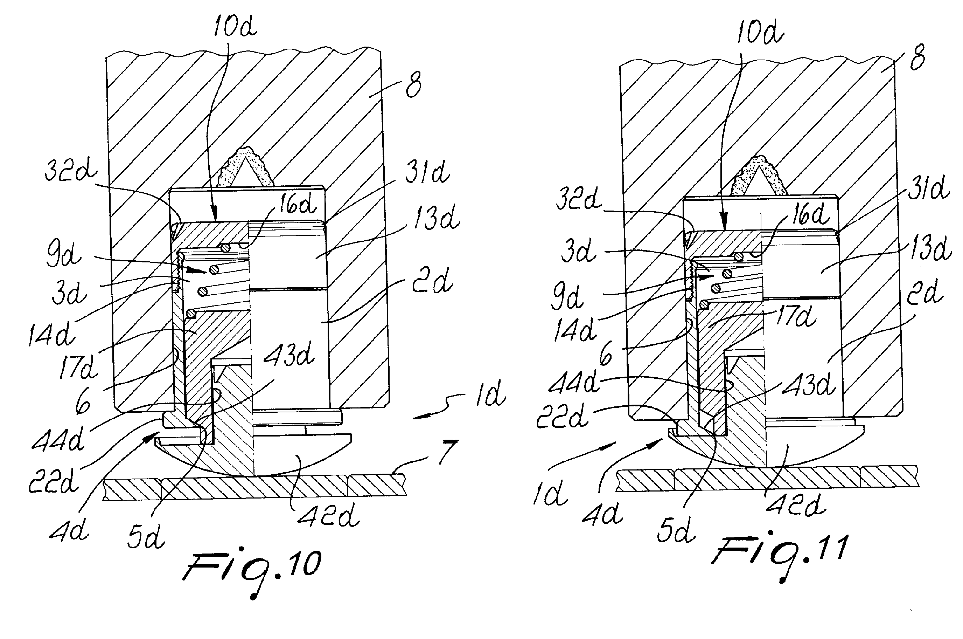

Figures 10 and 11 are partially axial sectional views of a fourth embodiment of the device according to the invention associated with a furniture component, respectively in the movement position and in the static position.

With reference to the figures, the device according to the invention, generally designated by the reference numerals 1a, 1b, 1c and 1d in the various embodiments, comprises an enclosure 2a, 2b, 2c, 2d that forms a receptacle 3a, 3b, 3c, 3d for a resting element 4a, 4b, 4c, 4d that can protrude from an opening 5a, 5b, 5c, 5d of the enclosure 2a-2d.

The enclosure 2a-2d can be accommodated in a seat 6 that is formed in the base, such as for example the lower end of the leg of a chair as shown, or of a supporting foot, of a furniture component 8 or the like, with the opening 5a-5d directed downward, i.e., toward the floor 7, in the normal conditions of use of the furniture component.

The resting element 4a-4d can move from a movement position, in which it protrudes partially from the enclosure 2a-2d through the opening 5a-5d in order to replace the base of the furniture component or the like in resting on the floor 7, to a static position, in which it is retracted into the enclosure 2a-2d, or vice versa.

The resting element 4a-4d can move from the movement position to the static position in contrast with the action of elastic means 9a, 9b, 9c, 9d, which are accommodated in the enclosure 2a-2d.

The device comprises means 10a-10d for adjusting the elastic preloading of the elastic means 9a-9d in order to allow to vary, according to the requirements, the elastic force that contrasts the passage of the resting element 4a-4d from the movement position to the static position.

In greater detail, the enclosure 2a-2b preferably has a substantially cylindrical shape and the receptacle 3a-3d is also substantially cylindrical and is formed coaxially in the enclosure 2a-2d. The opening 5a-5d is formed in the lower base of the enclosure 2a-2d that is meant to be directed toward the floor 7 when the enclosure 2a-2d is inserted in the base of the furniture component 8 in the condition for use.

The resting element 4a-4d can slide axially along the receptacle 3a-3d in order to pass from the movement position to the static position or vice versa.

The elastic means 9a-9d comprise a spring 12a, 12b, 12c, 12d that is interposed between the resting element 4a-4d and the upper base of the enclosure 2a-2d.

The adjustment means 10a, in the first embodiment, comprise an insert 13a that is shaped like a cylindrical plug and is coupled by means of a screw coupling to a threaded seat 14a that is formed in the upper end face of the enclosure 2a and is orientated coaxially to said receptacle 3a. The insert 13a forms a resting member for the end of the spring 12a that is directed away from the resting element 4a and can be screwed or unscrewed along the threaded seat 14a in order to vary the degree of preloading of the spring 12a.

Conveniently, on the outer base of the insert 13a it is possible to provide a recessed hexagonal seat 15a for an Allen wrench and/or a slotted or cross-shaped seat for the tip of a screwdriver in order to facilitate operations for screwing and unscrewing the insert 13a along the threaded seat 14a.

The spring 12a is constituted by a preferably frustoconical helical spring that is arranged so that its smaller end face is directed toward the insert 13a.

Advantageously, the insert 13a has, on its side directed toward the spring 12a, a contoured centering portion that is constituted for example by a central protrusion 16a that can be inserted in the spring 12a and is surrounded by an annular groove in order to keep the spring 12a correctly positioned.

In the other embodiments, the adjustment means comprise a cap 13b, 13c, 13d that constitutes the upper end face of the enclosure 2b-2d. The cap 13b-13d is provided internally with a thread that mates with a thread 14b, 14c, 14d, which is formed on the outer side wall of the enclosure 2b-2d starting from its upper end face. The cap 13b-13d can be screwed or unscrewed along the thread 14b-14d in order to vary the degree of compression of the spring 12b-12d, which rests, with its upper end face, against the inner face of the cap 12b-12d.

In these three embodiments also, the spring 12b-12d is constituted by a preferably frustoconical helical spring, which is arranged so that its lower end face is directed toward the cap 13b-13d. The cap 13b-13d has, on its side that is directed toward the spring 12b-12d, a contoured centering portion that is constituted for example by a central recess 16b, 16c, 16d in which the upper end of the spring 12b-12d engages.

Conveniently, on the outer side wall of the enclosure 2b-2d and on the outer side of the cap 13b-13d there are references 40, 41 that can be mutually aligned and are suitable to indicate the preloading imparted to the spring 12b-12d by means of the screwing or unscrewing rotation of the cap 13b-13d with respect to the enclosure 2b-2d. The references can be constituted by numerals 40 that are arranged on the outer side wall of the enclosure 2b-2d and express the compression load of the spring and by an arrow or line 41 that is provided on the outer surface of the cap 13b-13d. Optionally, the numerals 40 can be arranged on two or more rows depending on the number of turns that the cap 13b-13d can make.

Likewise, it is possible to provide references that can be mutually aligned on the insert 13a of the first embodiment and on the outer side of the upper end face of the enclosure 2a in order to indicate the compression load imparted to the spring 12a by screwing or unscrewing the insert 13a with respect to the enclosure 2a.

In the first embodiment, in the second embodiment and in the third embodiment, the resting element 4a, 4b, 4c in the movement position protrudes from the enclosure 2a, 2b, 2c through the opening 5a, 5b, 5c, so as to constitute an elastically yielding resting member on the floor 7 for the furniture component, while in a static position, it is fully retracted into the enclosure 2a, 2b, 2c so that the enclosure 2a, 2b, 2c rests rigidly on the floor 7.

In the first embodiment and in the third embodiment, the resting element 4a, 4c is constituted by a ball 17a, 17c that can slide axially along the receptacle 3a, 3c in order to pass from the movement position to the static position and vice versa.

Preferably, a pusher 18a, 18c is interposed between the ball 17a, 17c and the spring 12a, 12c and also can slide axially along the receptacle 3a, 3c. The pusher 18a, 18c has a cylindrical lateral surface, which mates slidingly with the lateral surface of the receptacle 3a, 3c, and a concave lower base for partially accommodating the ball 17a, 17c.

Advantageously, ball bearings 19a, 19c are interposed between the pusher 18a-18c and the ball 17a, 17c in order to reduce friction in the rotation of the ball 17a, 17c. The ball bearings 19a, 19c are accommodated in an annular track 20a, 20c formed in the concave lower base of the pusher 18a, 18c.

On the upper base of the pusher 18a, 18c there is a contoured centering portion that is constituted for example by a peripheral protrusion 2 1 a or by a central projection 21c that can engage the larger end face of the spring 12a, 12c in order to keep the spring 12a, 12c correctly positioned.

The ball 17a, 17c is preferably made of a very hard synthetic material, such as for example materials known commercially by the trademarks Nylon or Delrin.

The ball bearings 19a, 19c are preferably made of stainless steel so that they cannot be altered even if the device is used in environments that can cause infiltration of acid or corrosive substances within the receptacle 3a, 3c.

In the second embodiment shown in Figures 5 to 7, the resting element 4b is constituted by a piston 17b with a substantially cylindrical body that is accommodated coaxially and slidingly in the receptacle 3b in order to pass from the movement position to the static position and vice versa.

The end of the piston 17b that is meant to rest on the floor 7 is rounded and is preferably shaped like a spherical dome whose radius of curvature is greater than the radius of its cylindrical body.

Conveniently, said end of the piston 17b can be constituted by a head 42b that is coupled detachably, for example by pressing, to the lower end of the body of the piston 17b.

The opposite end of the piston 17b that is directed toward the spring 12b has a contoured centering portion that is constituted for example by a central protrusion 21b that can be inserted in the larger end face of the spring 12b in order to keep the spring 12b correctly positioned. The piston 17b is preferably made of a synthetic material, such as for example materials known commercially by the trademarks Nylon or Teflon.

In all the embodiments, the axial end of the enclosure 2a-2d in which the opening 5a-5d is formed has a flange 22a, 22b, 22c, 22d that is meant to rest against the inlet rim of the seat 6 formed in the base of the furniture component 8.

This achieves easier production of the seat 6 in the furniture component 8, since particular precision is not required as regards the depth of the seat 6, thanks to the fact that the correct positioning of the device with respect to the furniture component is ensured by the resting of the flange 22a-22d against the inlet rim of the seat 6.

In the various embodiments, on the opening 5a-5d there is a shoulder 43a, 43b, 43c, 43d that prevents the complete extraction of the resting element 4a-4d from the receptacle 3a-3d. In the first embodiment, the shoulder 43a is formed by a sealing ring 23a that is connected to the enclosure 2a, whereas in the other embodiments the shoulder 43b-43d is formed monolithically with the enclosure 2b-2d.

Preferably, for the device in the first three embodiments, means 24 are provided that are suitable to prevent the infiltration of dirt in the receptacle 3a-3c.

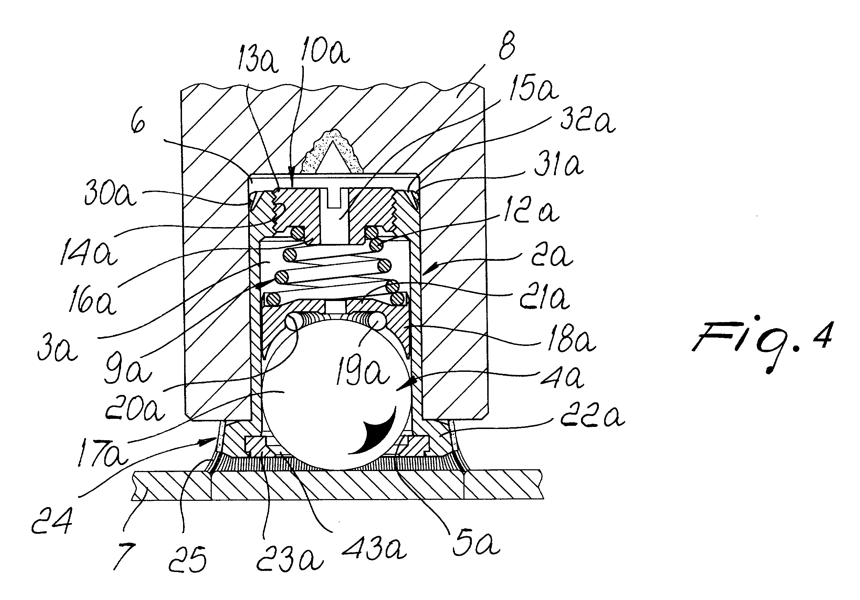

Said means 24, shown for the sake of simplicity only in Figure 4 with reference to the first embodiment, comprises an annular brush 25 that is associated with the enclosure 2a-2c and runs around the opening 5a-5c. The annular brush 25 is provided so as to rest on the floor even when the resting element 4a-4c is in the movement position.

In the fourth embodiment, the resting element 4d is constituted by a piston 17d, which like the piston 17b of the second embodiment can slide axially along the receptacle 3d in order to pass from the movement position to the static position and vice versa. Differently from the other embodiments, the end of the piston 17d that is meant to rest on the floor 7 is constantly extracted from the enclosure 2d and is larger than the opening 5d. Said end of the piston 17d is constituted by a head 42d that is shaped like a mushroom with a preferably rounded cap directed toward the floor 7; said head is inserted detachably by pressing in a seat 44d that is formed for this purpose in the lower end of the body of the piston 17d. The cap of the head 42d is larger than the opening 5d so as to rest, in the static position, against the lower axial end of the enclosure 2d, i.e., against the flange 22d, forming a substantially rigid resting member for the furniture component.

It should be noted that the head 42d, like the head 42b, can be replaced by a different head having another shape according to the requirements.

Operation of the device according to the invention is as follows.

Seats 6 are formed in the base of the furniture component, and a device according to the invention is inserted in each one of said seats. The number of seats 6 and therefore of devices 1 to be used may vary according to the furniture component.

The enclosure 2a-2d of each device is locked in the corresponding seat 6 by means of glue, adhesive disks interposed between the base of the furniture component and the flange 22a-22d, or by means of other locking means.

As an alternative, as shown, it is possible to provide on the outer side wall of the enclosure 2a, proximate to its axial end to be inserted in the seat 6, or on the cap 13b-13d, a portion 31a, 31 b, 31c, 31d that has a larger diameter, is appropriately beveled and optionally delimited in a downward region by a circumferential slot 30a. On the upper end face of the enclosure 2a or of the cap 13b-13d there is a circumferential channel 32a, 32b, 32c, 32d in order to increase the elastic deformability of the portion 31a-31d, whose diameter is slightly larger than the diameter of the seat 6. When the enclosure 2a-2d is inserted in the seat 6, the portion 31a-31d undergoes an elastic deformation and produces friction against the side walls of the seat 6. In this manner, the enclosure 2a-2d is retained within the seat 6. The elastic deformability of the portion 31a-31d in any case allows to extract the enclosure 2a-2d from the seat 6 if required.

In the normal operating conditions of the furniture component, the resting element 4a-4d rests on the floor 7 and both the weight of the furniture component and the weight of the objects or people placed on the furniture component bear on the spring 12a-12d.

For example, in the case of a chair, when said chair is used, the weight of the chair and the weight of the person sitting on the chair bear on the spring 12a-12d.

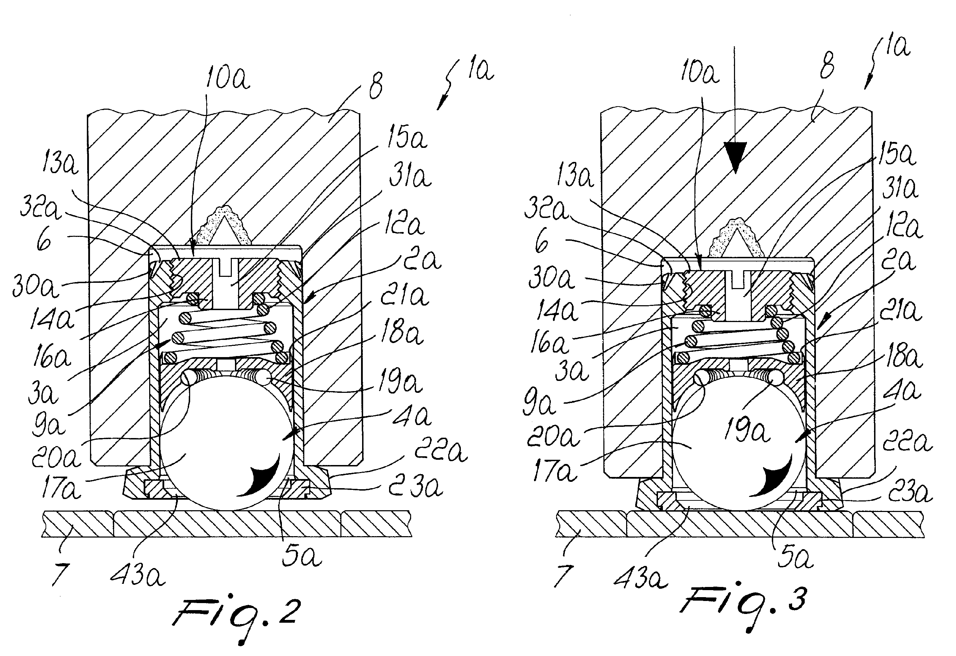

The preloading of the spring 12a-12d, by virtue of the adjustment means 10a-10d, is adjusted so that in these conditions the spring 12a-12d yields elastically until it allows at least partial retraction of the resting element 4a-4d into the enclosure 2a-2d, i.e., moving the resting element 4a-4d into the static position. In the first three embodiments, in this condition the furniture component 8 rests by means of the flange 22a, 22b, 22c on the floor 7, producing a rigid resting of the furniture component on the floor 7. In the fourth embodiment, in the static position, the furniture component rests on the floor 7 by means of the head 42d, which by resting against the flange 22d in any case produces a rigid resting of the furniture component on the floor 7. In this condition, the furniture component is difficult to move by sliding on the floor, as shown in Figures 3, 7, 9, 11.

When one wishes to move easily and with little noise the furniture component 8, it is sufficient to relieve it of the additional weight, so that only the weight of the furniture component 8 bears on the spring 12a-12d. The preloading of the spring 12a-12d is such that it does not allow in this case the retraction of the resting element 4a-4d into the enclosure 2a-2d, and therefore the resting element 4a-4d remains in the movement position, causing an elastically yielding resting of the furniture component on the floor 7 that produces limited friction during sliding on the floor 7, allowing to overcome small differences in level as shown in Figures 2, 4, 6, 8, 10.

When the furniture component is loaded again, the resting element 4a-4d returns to the static position, making it more difficult to move the furniture component.

It should be noted that the possibility to vary the preloading of the spring 12a-12d in the device according to the invention allows to use a same device for furniture components having different weights, obtaining in any case correct operation of the device without requiring replacement of the spring or of the entire device.

In practice it has been found that the device according to the invention fully achieves the intended aim, since it can be adapted, by virtue of simple and quick operations, to various weight categories of the furniture components on which it is to be fitted.

Another advantage of the device according to the invention is that it does not alter the overall styling of the furniture component, since even when the resting element of the device is in the movement position, the device according to the invention remains practically invisible from outside.

In the embodiments described above, individual characteristics, given in relation to specific examples, may actually be interchanged with other different characteristics that exist in other examples of embodiment.

Moreover, it is noted that everything found to be already known during the patenting process is understood not to be claimed and to be the subject of a disclaimer.

The device thus conceived is susceptible of numerous modifications and variations, all of which are within the scope of the inventive concept; all the details may further be replaced with other technically equivalent elements.

In practice, the materials employed, as well as the dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device for facilitating the movement of furniture components or the like, **characterized in that** it comprises an enclosure that forms a receptacle for a resting element that protrudes, in at least one active condition, from an opening of said enclosure, said enclosure being accommodatable in a seat formed in the base of a furniture component or the like so that said opening faces downward, said resting element being movable with respect to said enclosure from a movement position, in which it protrudes partially from said enclosure through said opening and constitutes an elastically yielding resting member for the furniture component or the like on the floor, to a static position, in which it is at least partially retracted into said enclosure with respect to said movement position, in order to obtain a substantially rigid resting of the furniture component or the like, and vice versa, said resting element being movable from said movement position to said static position in contrast with the action of elastic means that are accommodated in said enclosure, means being provided for adjusting the elastic preloading of said elastic means in order to adjust the elastic force that contrasts the passage of said resting element from said movement position to said static position.

2. The device according to claim 1, **characterized in that** said enclosure has a substantially cylindrical shape, said receptacle being substantially cylindrical and being formed coaxially in said enclosure, said opening being formed at the base of said enclosure that is meant to be directed toward the floor when said enclosure is fitted in the base of the furniture component or the like; said resting element being able to slide axially within said receptacle; said elastic means comprising a spring that is interposed between said resting element and the upper end face of said enclosure.

3. The device according to claims 1 and 2, **characterized in that** said adjustment means comprise an insert that is coupled by means of a screw coupling to a threaded seat that is formed in the upper end face of said enclosure and is orientated coaxially to said receptacle, said insert forming a resting member for the end of said spring that is directed away from said resting element and allowing screwing and unscrewing along said threaded seat in order to vary the degree of compression of said spring.

4. The device according to one or more of the preceding claims, **characterized in that** said adjustment means comprise a cap that constitutes the upper end face of said enclosure; said cap being provided internally with a thread that is mated with a thread formed on the outer side wall of said enclosure starting from its upper end face, said cap allowing screwing or unscrewing along said thread in order to vary the degree of compression of said spring.

5. The device according to one or more of the preceding claims, **characterized in that** on a part of said enclosure and on said cap or said insert that can rotate with respect to said part of the enclosure during screwing or unscrewing references are provided that can be aligned and are suitable to indicate the preloading given to the spring by way of the rotation of said cap or of said insert with respect to said part of the enclosure.

6. The device according to one or more of the preceding claims, **characterized in that** said resting element, in said static position, is fully retracted into said receptacle.

7. The device according to one or more of the preceding claims, **characterized in that** said resting element, in said static position, rests against a stop element that is formed by said enclosure or by the furniture component or the like and is adapted to prevent the further retraction of said resting element into said receptacle.

8. The device according to one or more of the preceding claims, **characterized in that** said resting element is constituted by a piston that has a substantially cylindrical body that is accommodated coaxially in said receptacle and can slide axially along said receptacle in order to pass from said movement position to said static position and vice versa.

9. The device according to one or more of the preceding claims, **characterized in that** the end of said piston that is meant to rest on the floor is constantly extracted from said enclosure and has larger dimensions than said opening.

10. The device according to one or more of the preceding claims, **characterized in that** the end of said piston that is meant to rest on the floor is rounded.

11. The device according to one or more of the preceding claims, **characterized in that** the end of said piston that is meant to rest on the floor is constituted by a cap that is detachably associated with the body of said piston.

12. The device according to one or more of the preceding claims, **characterized in that** said resting element is constituted by a ball that can slide axially along said receptacle in order to pass from said movement position to said static position and vice versa.

13. The device according to one or more of the preceding claims, **characterized in that** it comprises a pusher that is interposed between said spring and said ball, said pusher being able to slide axially within said receptacle.

14. The device according to one or more of the preceding claims, **characterized in that** ball bearings for reducing friction are interposed between said pusher and said ball.

15. The device according to one or more of the preceding claims, **characterized in that** said ball bearings are accommodated in at least one track formed on the side of said pusher that is directed toward said ball.

16. The device according to one or more of the preceding claims, **characterized in that** on said opening of said receptacle a shoulder is provided being adapted to prevent complete extraction of said resting element from said receptacle through said opening.

17. The device according to one or more of the preceding claims, **characterized in that** the axial end of said enclosure in which said opening is formed has a flange that is meant to rest against the inlet rim of the seat formed in the base of the furniture component that accommodates said enclosure.

18. The device according to one or more of the preceding claims, **characterized in that** it comprises means adapted to prevent the infiltration of dirt in said receptacle.

19. The device according to one or more of the preceding claims, **characterized in that** said means adapted to prevent infiltration of dirt comprise an annular brush that is associated with said enclosure and is arranged around said opening.

20. The device according to one or more of the preceding claims, **characterized in that** said spring is helical and frustoconical, with the larger end face directed toward said resting element.

21. The device according to one or more of the preceding claims, **characterized in that** said insert or said cap has, on its side directed toward said spring, a contoured centering portion for the end of said spring that is directed toward said insert or said cap.

22. The device according to one or more of the preceding claims, **characterized in that** on the end of said piston that is directed toward said spring there is a contoured centering portion for the end of said spring that is directed toward said piston.

23. The device according to one or more of the preceding claims, **characterized in that** on the side of said pusher that is directed toward said spring there is a contoured centering portion for the end of said spring that is directed toward said pusher.

24. The device according to one or more of the preceding claims, **characterized in that** on the outer side wall of said enclosure there is a portion that has a larger diameter and can engaged with friction the side walls of said seat for the retention of said enclosure in said seat.
